# EUROPEAN PATENT SPECIFICATION

(11) **EP 4 249 325 B1**
(45) Date of publication and mention of the grant of the patent: **21.01.2026**
(21) Application number: 22164519.5
(22) Date of filing: 25.03.2022
(51) Int. Cl.: B60R 13/02

(54) **INTERIOR TRIM PART OF OR FOR A VEHICLE, A VEHICLE COMPRISING SUCH AN INTERIOR TRIM PART AND A METHOD FOR MANUFACTURING SUCH AN INTERIOR TRIM PART**
INNENVERKLEIDUNGSTEIL EINES FAHRZEUGS ODER FÜR EIN FAHRZEUG, FAHRZEUG MIT EINEM SOLCHEN INNENVERKLEIDUNGSTEIL UND VERFAHREN ZUR HERSTELLUNG EINES SOLCHEN INNENVERKLEIDUNGSTEILS
PIÈCE DE GARNITURE INTÉRIEURE D'UN VÉHICULE OU POUR UN VÉHICULE, UN VÉHICULE COMPRENANT UNE TELLE PIÈCE DE GARNITURE INTÉRIEURE ET UN PROCÉDÉ DE FABRICATION D'UNE TELLE PIÈCE DE GARNITURE INTÉRIEURE

(43) Date of publication of application: 27.09.2023
(73) Proprietor: Motherson Innovations Company Limited, London EC2N 2AX (GB)
(72) Inventor: Weingärtner, Torsten, 79108 Freiburg (DE); Birkhofer, Marco, 79227 Schallstadt (DE); Heinz, Christoph, 79115 Freiburg (DE)
(74) Representative: Westphal, Mussgnug & Partner Patentanwälte mbB

(56) References cited:
- EP-A1- 2 765 570
- DE-A1- 102008 041 701
- DE-U1- 202011 050 956
- JP-A- 2003 326 897

## Description

The present disclosure relates to an interior trim part of a vehicle, a vehicle comprising such an interior trim part and a method for manufacturing such an interior trim part.

Although the exterior design of a modern vehicle is predominant in the differentiation of the vehicles and the vehicle manufacturers, the interior design is becoming increasingly important as a means for said differentiation and brand positioning.

A trend that has become apparent in recent times is that the interior trim parts are provided with design elements that reflect exterior design elements of the given vehicle. Such interior trim parts may be door panels, dashboards and pillar claddings, to name a few. One example of exterior design elements is the grille of a given vehicle, probably one of the most important exterior design elements. Grilles of modern vehicles are provided with an increasingly complex three-dimensional structure. Such a three-dimensional structure offers further design possibilities for the brand positioning. The interior trim parts are therefore also provided with a three-dimensional structure to ensure a high recognition of the exterior design element reference is made to.

DE 10 2015 003 448 A1, EP 3 002 121 A1, EP 2 556 940 A1 and DE 20 2010 005 373 U1 disclose interior trim parts which may be provided with particular design elements. DE 20 2011 050 956 U1, DE 10 2008 041 701 A1, EP 2 765 570 A1 and JP 2003 326897 A are mentioned as further prior art documents, whereby the DE 20 2011 050 956 U1 discloses an interior trim part according to the preamble of claim 1.

The décor layer of interior trim parts is usually made of a soft surface material. The implementation of a three-dimensional structure on a soft surface material is normally made by adding inks or pastes to the décor layer, for example by digital printing or screen printing. The quality for example in terms of contour accuracy, height of the three-dimensional structure and surface resistance of such three-dimensional structures is mostly poor. One reason may be that the soft material does not have a sufficiently planar surface structure to which the inks or pastes are added. The more planar the surface structure is the better the quality impression. Moreover the printing process is complex and the mentioned materials are expensive.

It is one task of one embodiment of the present disclosure to present an interior trim part by which the drawbacks as mentioned above can be eliminated or at least reduced. In particular, it is one task to provide an interior trim part provided with a three-dimensional structure that is easy to manufacture and has a high durability.

The task is solved by the features specified in claims 1 and **5.** Advantageous embodiments are the subject of the dependent claims.

According to one embodiment of the present disclosure the interior trim part of or for a vehicle comprises
- a carrier being made of a thermoplastic material and having
   o a first surface,
   o a second surface,
   o at least one elevation arranged on the first surface, and
- a perforated décor layer applied to the first surface and forming at least one hole, the hole having a shape such that the elevation is enclosed by the décor layer and protruding the décor layer, thereby forming a three-dimensional surface structure.

The décor layer is applied to the first surface such that the elevation or elevations is/are enclosed by the hole or holes of the décor layer. Usually the number of holes and the number of elevations match. The number can be freely chosen. The elevations and the décor layer are made of different materials. The material of the décor layer may be chosen to provide the desired optical appearance. In contrast to that the elevations are part of the carrier which may be made of a material that provides high durability. Both the material of the elevations and the décor layer may also be chosen in consideration of haptic parameters.

In another embodiment the décor layer is enclosing the elevation in a gap-free manner. Although one may provide gaps between the hole of the décor layer and the elevation, the quality impression increases when the elevation is enclosed by the décor layer in a gap-free manner. Moreover, the accumulation of dust and other particles in the gap is eliminated or at least significantly reduced.

According to the invention, the elevation is formed by a separate elevation component that is attached to the carrier via the first surface. While the elevation component is fastened to the carrier and not to the décor layer, the material of the elevation component may be different from the material of the carrier. The material of the elevation component may be of better quality compared to the material of the carrier, e.g. in terms of haptic and/or optical aspects. Usually the better the quality the more expensive the material. The use of high quality and thus more expensive material may be restricted to the elevation. The carrier may be made of a cheaper material thereby keeping the additional costs for providing the three-dimensional structure according to the present disclosure low.

It is worth mentioning that a given interior trim part may comprise elevations formed by the carrier as well.

By the elevations formed by separate elevation components the degree of design options is further increased. The separate elevation components may differ from each other not only in size but also of material, surface structure and color, to name a few parameters. A large degree of individualization may be provided.

According to an embodiment not forming part of the present invention, the elevation comprises a refined surface. Within the present disclosure the term "refined surface" is to be understood as processing a standard surface into a higher-value surface by adding design elements that can be perceived by sight or touch. Thus a surface can appear to be superior compared to the surrounding surfaces of a given interior trim part. It may be possible to provide only a few elevations with such a refined surface, while the other elevations comprise an untreated surface. In this embodiment further design possibilities are provided at fairly low costs.

Another aspect of the present disclosure is directed to a vehicle, comprising an interior trim part according to one of the embodiments previously discussed. The technical effects and advantages as discussed with regard to the present interior trim part equally apply to the vehicle. Briefly, the elevations are not applied to the décor layer. Therefore the problem of weak adhesion between e.g. the ink and the décor layer is eliminated.

Another aspect of the present disclosure is directed to a method for manufacturing an interior trim part according to one of the embodiments previously discussed, comprising the following steps:
- injection molding of a carrier using a thermoplastic material, the carrier comprising a first surface, a second surface and at least one elevation arranged on the first surface,
- providing a décor layer comprising at least one hole, and
- laminating the décor layer onto the first surface such that the elevation is enclosed by the décor layer and protruding the décor layer, thereby forming a three-dimensional surface structure.

The technical effects and advantages as discussed with regard to the present interior trim part equally apply to the method for the manufacture of such an interior trim part. Briefly, the elevations are not applied to the décor layer. Therefore the problem of weak adhesion between e.g. the ink and the décor layer is eliminated.

Further aspect of the present disclosure is directed to a method for manufacturing an interior trim part according to one of the embodiments previously discussed, comprising the following steps:
- injection molding of a carrier using a thermoplastic material, the carrier comprising a first surface and a second surface,
- injection molding at least one separate elevation component,
- fastening the separate elevation component to the first surface of the carrier, thereby forming an elevation,
- providing a décor layer comprising at least one hole, and
- laminating the décor layer onto the first surface such that the elevation is enclosed by the décor layer and protruding the décor layer, thereby forming a three-dimensional surface structure.

While the elevation is fastened to the carrier and not to the décor layer, the material of the elevation may be different from the material of the carrier. The material of the separate elevation component may be of better quality compared to the material of the carrier, e.g. in terms of haptic and/or optical aspects and in terms of durability. Usually the better the quality the more expensive the material. The use of high quality and thus more expensive material may be restricted to the separate elevation component. The carrier may be made of a cheaper material thereby keeping the additional costs for providing the three-dimensional structure according to the present disclosure low.

In a further embodiment the elevation component is made of a hard thermoplastic material. Within the present disclosure the term "hard thermoplastic material" is to be understood as a solid material that barely yields under pressure and is of such a nature that the shape can only be changed with great effort when cured. The use of a hard thermoplastic material reduces wear caused by the operation of the respective vehicle and therefore adds to the durability of the interior trim part. Examples of such hard thermoplastic materials may be ABS (acrylonitrile butadiene styrene), PC/ABS (polycarbonate/ acrylonitrile butadiene styrene), PP (polypropylene) and PC (polycarbonate).

A further embodiment defines that the elevation component is fastened to the carrier by gluing or welding. Gluing and welding are fairly simple and well manageable also when a large quantity of interior trim parts are produced.

According to another embodiment not forming part of the invention, the method comprises the step of providing the elevation or the elevation component with a refined surface by coating, painting and/or hot stamping. Coating, painting and hot stamping are processes that are fairly simple and well manageable also when a large quantity of interior trim parts are produced.

In a further embodiment the décor layer is made by a soft thermoplastic material and/or soft thermoset material like a woven fabric, a knitted fabric, a microfiber fleece, an artificial leather, a foil with or without foam, spacer fabrics, fleece as a backing. The décor layer may be made of a single material or a composite material.

Within the present disclosure the term "soft material" is to be understood as a material that yields easily to pressure; of such a nature that changing the shape is easy, with little effort. Soft material usually offers better haptic properties compared to hard materials.

In a further embodiment the décor layer is perforated by punching, laser cutting, water jet cutting, cutting with a blade or produced by laser jetting, slush molding, spraying or casting. While punching and cutting are subtractive manufacturing processes, laser jetting, slush molding, spraying and casting are master forming manufacturing processes. Such a master forming manufacturing process may be conducted according to DIN 8580. All of the mentioned processes are fairly simple and well manageable also when a large quantity of interior trim parts are produced.

According to another embodiment the décor layer is laminated onto the first surface such that the décor layer is enclosing the elevation in a gap-free manner. Although one may provide gaps between the décor layer and the elevation the quality impression increases when the elevation is enclosed by the décor layer in a gap-free manner. Moreover, the accumulation of dust and other particles in the gap is eliminated or at least significantly reduced.

The present invention is described in detail with reference to the drawings attached wherein
Figures 1A to 1F different steps of a manufacturing process for producing a first embodiment not forming part of the invention of an interior trim part according to the present disclosure,
Figures 2A to 2F different steps of a manufacturing process for producing a second embodiment not forming part of the invention of an interior trim part according to the present disclosure,
Figures 3A to 3H different steps of a manufacturing process for producing a third embodiment of an interior trim part according to the present disclosure,
Figures 4A to 4G different steps of a manufacturing process for producing a fourth embodiment of an interior trim part according to the present disclosure, and
Figure 5 a vehicle comprising at least one trim part according to the present invention, all of the Figures being principle sketches.

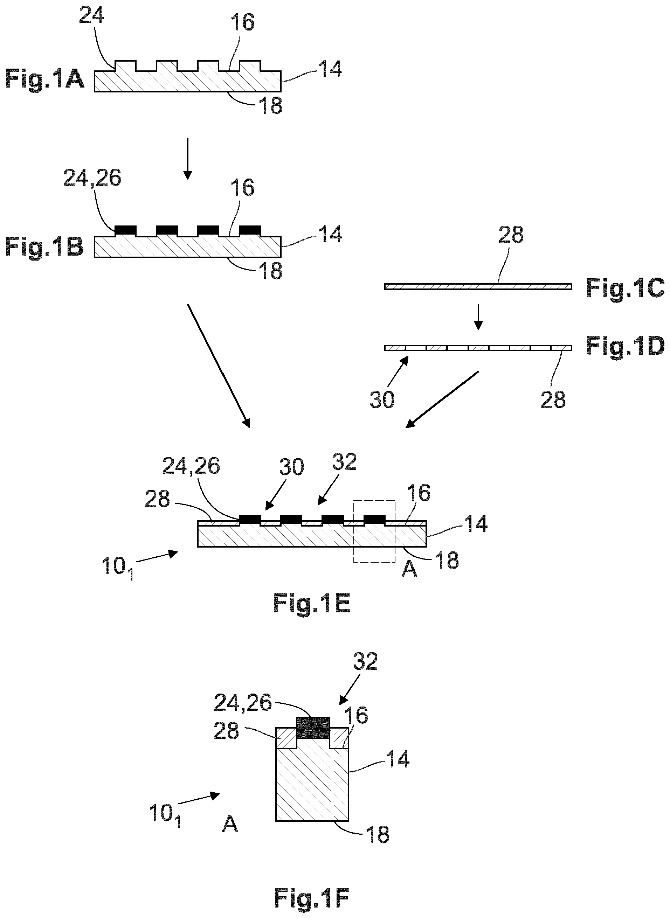

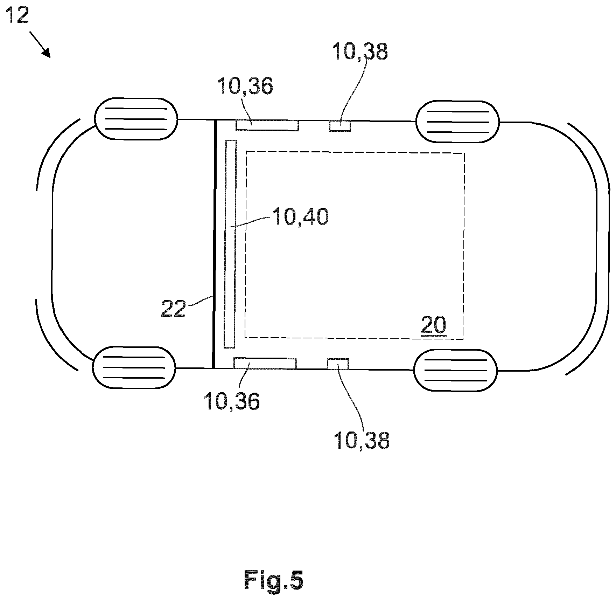

In Figures 1A to 1E different steps of a manufacturing process for producing a first embodiment of an interior trim part 10₁ of or for a vehicle 12 (see Figure 5) according to the present disclosure are shown by means of principle sketches.

In Figure 1A a carrier 14 is shown that may be made by injection molding of a thermoplastic material as an initial manufacturing step. The carrier 14 comprises a first surface 16 and a second surface 18. Within the context of the present disclosure the first surface 16 is the surface facing a passenger compartment 20 of the vehicle 12 while the second surface 18 is arranged opposite the first surface 16 and is thus facing away from the passenger compartment 20. The second surface 18 may comprise fastening means (not shown) by which the carrier 14 can be fastened to a vehicle body 22.

The carrier 14 is forming a plurality of elevations 24 arranged on the first surface 16 and thus also forming parts of the first surface 16.

In a subsequent step (Figure 1B) the elevations 24 may be provided with a refined surface 26 if the natural or molded color is not desired. In this case the surface is treated in a way that it is provided with particular surface properties, e.g. with respect to color or haptic aspects. The refined surface 26 may be provided by coating, painting and/or hot stamping.

Figure 1C shows the step of providing a décor layer 28 which may also be made by injection molding of a thermoplastic material which is, however, softer compared to the material used for the carrier 14. The décor layer 28 can be made by a soft thermoplastic material and/or soft thermoset material like a woven fabric, a knitted fabric, a microfiber fleece, an artificial leather, a foil with or without foam, spacer fabrics, fleece as a backing. The décor layer 28 may be made of a single material or a composite material. In Figure 1D a perforation step is shown by which the décor layer 28 is provided with a plurality of holes 30. The décor layer 28 may be perforated by punching or laser cutting. Not shown is a manufacturing step of the décor layer 28 using master forming manufacturing processes like laser jetting. As laser jetting is an additive manufacturing step it directly leads to the décor layer 28 as shown in Figure 1D.

In this case the number of holes 30 matches the number of elevations 24 of the carrier 14.

Although in Figures 1A to 1D the steps of providing the décor layer 28 and the step of perforating the décor layer 28 are shown to be conducted after the steps of manufacturing the carrier 14 layer and of providing the elevation with the refined surface 26, it is also possible to carry out the steps in parallel or in a different sequence.

In Figure 1E the perforated décor layer 28 is applied to the first surface 16 of the carrier 14 by lamination. The décor layer 28 is laminated onto the first surface 16 such that the décor layer 28 is enclosing the elevation in a gap-free manner. The manufacture of the interior trim part 10₁ according to the first embodiment is now completed.

Figure 1F shows section A as defined in Figure 1E in an enlarged way, however not true to scale. One can see that the elevations 24 protrude the décor layer 28 such that a three-dimensional structure 32 is generated. The three-dimensional structure 32 is perceptible by a passenger who is touching or looking at the interior trim part 10₁.

One may also note that a part of the refined surface 26 is enclosed by the décor layer 28. As noted, the first surface 16 is facing to the passenger compartment 20 of the vehicle 12. Only the refined surface 26 and the décor layer 28 are visible from the passenger compartment 20. However, it may also be possible to choose the dimensions of the refined surface 26 and the décor layer 28 such that the free surface of the décor layer 28 is flush with the internal end of the refined surface 26. In any case gaps between the refined surface 26 and the décor layer 28 should be avoided due to optical and aesthetical reasons.

In Figures 1A to 1F the elevations 24 are shown to have approximately a rectangular shape within the plane of the drawings. Thus the elevations 24 may at least approximately have a cuboid or cylindrical shape. However, the shapes the elevations 24 may be provided with may almost freely chosen. Tapered shapes in the manner of a pyramid or a cone may be some examples. Moreover, in Figures 1A to 1F the elevations 24 are shown to be individual, however, they may be connected to each other such that complex courses may be realized. The courses may depict the brand logo of the vehicle 12 manufacturer or letterings referring to the vehicle 12 manufacturer and/or to particulars of the respective vehicle 12.

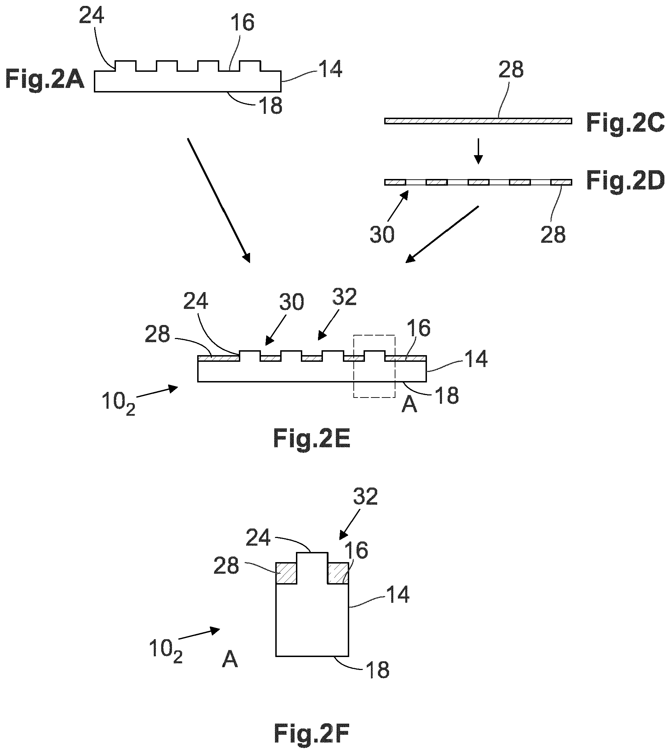

Figures 2A to 2F show the manufacturing steps of a second embodiment of the interior trim part 10₂. The manufacturing steps of the second embodiment of the interior trim part 10₂ are to a large extend the same as the ones described for the first embodiment of the interior trim part 10₁. However, in this case the carrier 14 is made of standard materials in natural or black color like ABS, PC/ABS, PP or PC. Alternatively, the carrier 14 is made of colored plastics like ABS, PC/ABS, PP or PC. In this embodiment of the interior trim part 10₂ the carrier 14 is made of a white material. In case the carrier 14 is made of a material that has the desired surface properties, it is not necessary to provide the elevations with a refined surface 26. Thus, the step shown in Figure 1B can be omitted.

Figure 2B therefore does not exist.

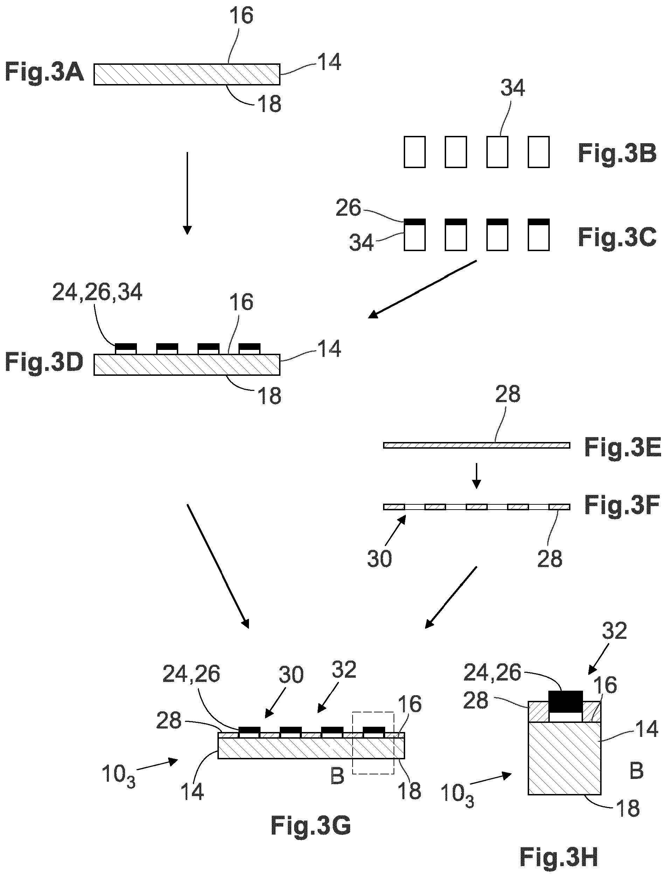

Figures 3A to 3H show the manufacturing steps of a third embodiment of the interior trim part 10₃ according to the present disclosure. The principle manufacturing steps are the same as described for the first embodiment of the interior trim part 10₁. Therefore, only the main differences are described in the following.

The first surface 16 of the carrier 14 shown in Figure 3A is not provided with elevations 24 and thus plane. Instead, separate elevation components 34 are manufactured in a separate step as shown in Figure 3B. The elevation components 34 may be injection molded using a thermoplastic material that, when cured, is harder compared to the material of the décor layer 28. The material the elevation components 34 are made of may be the same as of the carrier 14, however, a different material may also be used.

In Figure 3C the separate elevation components 34 are provided with the refined surface 26, also by coating, painting and/or hot stamping. As shown in Figure 3D the elevation components 34 are fastened to the first surface 16 of the carrier 14, e.g. by gluing and/or welding, thereby providing the carrier 14 with elevations 24. In particular when the elevation components 34 are welded to the carrier 14 their size may change.

Figure 3E shows the step of providing a décor layer 28 which in principle equals the step described with Figure 1C. In Figure 3F the perforation step is shown by which the décor layer 28 is provided with a plurality of holes 30. This step may be conducted in the same way as described with reference to Figure 1D. Also in this case the number of holes 30 matches the number of elevations 24 of the carrier 14.

In Figure 3G the perforated décor layer 28 is applied to the first surface 16 of the carrier 14 by lamination. The décor layer 28 is laminated onto the first surface 16 such that the décor layer 28 is enclosing the elevation in a gap-free manner with respect to the holes 30.

Figure 3H shows section B as defined in Figure 3G in an enlarged way, however not true to scale. One can see that the elevations 24 protrude the décor layer 28 such that a three-dimensional structure 32 is generated.

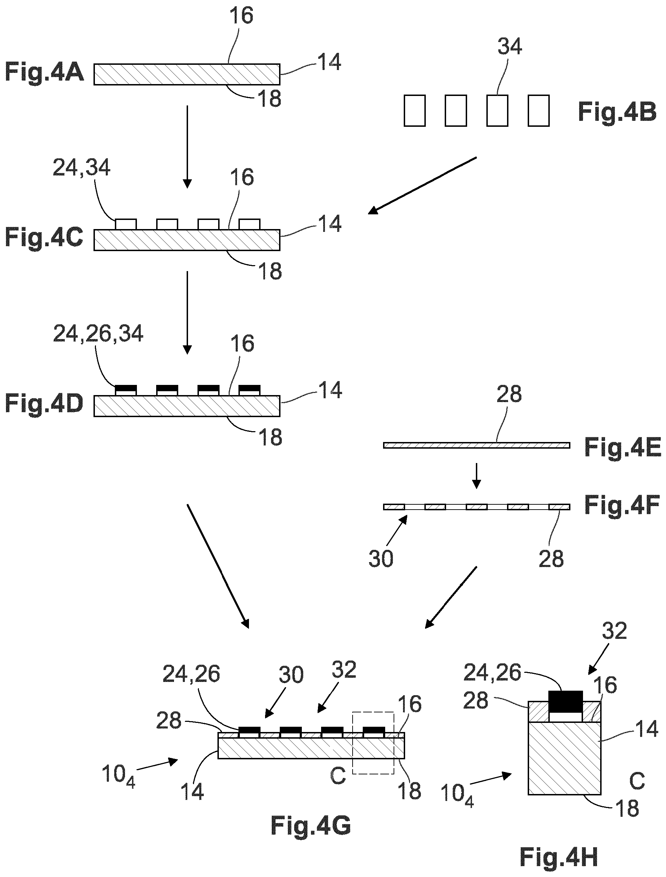

In Figures 4A to 4H the manufacturing steps of a fourth embodiment of the interior trim part 10₄ according to the present disclosure are shown. It is noted that the final interior trim part 10₃ according to the third embodiment and the final interior trim part 10₄ according to the fourth embodiment are largely identical. They only differ in the sequence of the manufacturing steps. While in the third embodiment the individual elevation components 34 are provided with the refined surface 26 (Figure 3C) before they are connected to the carrier 14, in the fourth embodiment the individual elevation components 34 are first connected to the carrier 14 and are then provided with the refined surface 26.

When comparing Figures 1F, 3H and 4H one may notice that the main difference is that the interior trim part 10₁ according to the first embodiment is made of two different components while the interior trim part 10₃, 10₄ according to the third and fourth embodiment is made of three different components.

It is noted that the manufacturing processes of Figures 1A to 1E and Figures 3A to 3G may be combined with each other. The same is true for a combination of the manufacturing processes shown in Figures 1A to 1E and Figures 4A to 4G and in Figures 3A to 3G and Figures 4A to 4G.

The carrier 14 may have sections that are already provided with elevations 24 as shown in Figure 1A. However, the carrier 14 may also have plane sections as shown in Figures 3A and 4A. The use of individual elevation components 34 may offer a higher degree of design possibilities, in particular with respect to individualizations.

Figure 5 shows principle top view of the vehicle 12 which comprises a number of interior trim parts 10 according to the present disclosure. Door panels 36, pillar claddings 38 and dashboards 40 are named as non-exhaustive examples of such interior trim parts 10.

### Reference list

- 10: interior trim part
- 10₁ - 10₄: interior trim part
- 12: vehicle
- 14: carrier
- 16: first surface
- 18: second surface
- 20: passenger compartment
- 22: vehicle body
- 24: elevation
- 26: refined surface
- 28: décor layer
- 30: hole
- 32: three-dimensional structure
- 34: elevation component
- 36: door panel
- 38: pillar cladding
- 40: dashboard

## Claims

1. Interior trim part (10) of or for a vehicle (12), comprising
- a carrier (14) being made of a thermoplastic material and having
o a first surface (16),
∘a second surface (18),
o at least one elevation (24) arranged on the first surface (16), and
- a perforated décor layer (28) applied to the first surface (16) and forming at least one hole (30), the hole (30) having a shape such that the elevation (24) is enclosed by the décor layer (28) and is protruding the décor layer (28), thereby forming a three-dimensional surface structure (32), **characterized in that** the elevation (24) is formed by a separate elevation component (34) that is attached to the carrier (14) via the first surface (16).

2. Interior trim part (10) according to claim 1,
**characterized in that** the décor layer (28) is enclosing the elevation (24) in a gap-free manner.

3. Interior trim part (10) according claim 1 or claim 2,
**characterized in that** the elevation (24) comprises a refined surface (26).

4. Vehicle (12), comprising an interior trim part (10) according to one of the preceding claims.

5. Method for manufacturing an interior trim part (10) of or for a vehicle (12), comprising the following steps:
- injection molding of a carrier (14) using a thermoplastic material, the carrier (14) comprising a first surface (16) and a second surface (18),
- injection molding at least one separate elevation component (34),
- fastening the separate elevation component (34) to the first surface (16) of the carrier (14), thereby forming an elevation (24),
- providing a décor layer (28) having at least one hole (30), and
- laminating the décor layer (28) onto the first surface (16) such that the elevation (24) is enclosed by the décor layer (28) and is protruding the décor layer (28), thereby forming a three-dimensional surface structure (32).

6. Method according to claim 5,
**characterized in that** the elevation component (34) is made of a hard thermoplastic material.

7. Method according to one of the claims 5 or 6,
**characterized in that** the elevation component (34) is fastened to the carrier (14) by gluing or welding.

8. Method according to one of the claims 5 to 7, comprising the following step:
- providing the elevation (24) or the elevation component (34) with a refined surface (26) by coating, painting or hot stamping.

9. Method according to one of the claims 5 to 8, **characterized in that** the décor layer (28) is made by a soft thermoplastic and/or thermoset material.

10. Method according to one of the claims 5 to 9, **characterized in that** the décor layer (28) is perforated by punching, laser cutting, water jet cutting, cutting with a blade or produced by laser jetting, slush molding, spraying or casting.

11. Method according to one of the claims 5 to 10,
**characterized in that** the décor layer (28) is laminated onto the first surface (16) such that the décor layer (28) is enclosing the elevation (24) in a gap-free manner.

## Patentansprüche

1. Innenverkleidungsteil (10) von einem oder für ein Fahrzeug (12), das aufweist:
- einen Träger (14), der aus einem thermoplastischen Material hergestellt ist und
o eine erste Oberfläche (16),
o eine zweite Oberfläche (18),
o zumindest eine auf der ersten Oberfläche (16) angeordnete Erhebung (24)
aufweist, und
- eine perforierte Dekorschicht (28), die auf die erste Oberfläche (16) aufgebracht ist und zumindest ein Loch (30) bildet, wobei das Loch (30) eine solche Form aufweist, dass die Erhebung (24) von der Dekorschicht (28) umschlossen ist und aus der Dekorschicht (28) vorsteht, wodurch eine dreidimensionale Oberflächenstruktur (32) gebildet wird, **dadurch gekennzeichnet, dass** die Erhebung (24) durch eine separate Erhebungs-Komponente (34), die über die erste Oberfläche (16) an dem Träger (14) angebracht ist, gebildet ist.

2. Innenverkleidungsteil (10) nach Anspruch 1,
**dadurch gekennzeichnet, dass** die Dekorschicht (28) die Erhebung (24) auf eine lückenlose Weise umschließt.

3. Innenverkleidungsteil (10) nach Anspruch 1 oder Anspruch 2,
**dadurch gekennzeichnet, dass** die Erhebung (24) eine verfeinerte Oberfläche (26) aufweist.

4. Fahrzeug (12), das ein Innenverkleidungsteil (10) nach einem der vorstehenden Ansprüche aufweist.

5. Verfahren zum Herstellen eines Innenverkleidungsteils (10) von einem oder für ein Fahrzeug (12), das die folgende Schritte aufweist:
- Spritzgießen eines Trägers (14) unter Verwendung eines thermoplastischen Materials, wobei der Träger (14) eine erste Oberfläche (16) und eine zweite Oberfläche (18) aufweist,
- Spritzgießen zumindest einer separaten Erhebungskomponente (34),
- Befestigen der separaten Erhebungskomponente (34) an der ersten Oberfläche (16) des Trägers (14), wodurch eine Erhebung (24) gebildet wird,
- Bereitstellen einer Dekorschicht (28) mit zumindest einem Loch (30), und
- Laminieren der Dekorschicht (28) auf die erste Oberfläche (16), so dass die Erhebung (24) durch die Dekorschicht (28) umschlossen wird und aus der Dekorschicht (28) vorsteht, wodurch eine dreidimensionale Oberflächenstruktur (32) gebildet wird.

6. Verfahren nach Anspruch 5,
**dadurch gekennzeichnet, dass** die Erhebungskomponente (34) aus einem harten thermoplastischen Material hergestellt ist.

7. Verfahren nach einem der Ansprüche 5 oder 6,
**dadurch gekennzeichnet, dass** die Erhebungskomponente (34) durch Kleben oder Schweißen an dem Träger (14) befestigt wird.

8. Verfahren nach einem der Ansprüche 5 bis 7, das den folgenden Schritt aufweist:
- Versehen der Erhebung (24) oder der Erhebungskomponente (34) mit einer verfeinerte Oberfläche (26) durch Beschichten, Lackieren oder Heißprägen.

9. Verfahren nach einem der Ansprüche 5 bis 8, **dadurch gekennzeichnet, dass** die Dekorschicht (28) aus einem weichen thermoplastischen und/oder duroplastischen Material hergestellt ist.

10. Verfahren nach einem der Ansprüche 5 bis 9, **dadurch gekennzeichnet, dass** die Dekorschicht (28) durch Stanzen, Laserschneiden, Wasserstrahlschneiden, Schneiden mit einer Klinge perforiert oder durch Laser-Jetting, Schalengießen, Sprühen oder Gießen hergestellt wird.

11. Verfahren nach einem der Ansprüche 5 bis 10,
**dadurch gekennzeichnet, dass** die Dekorschicht (28) so auf die erste Oberfläche (16) laminiert wird, dass die Dekorschicht (28) die Erhebung (24) auf eine lückenlose Weise umschließt.

## Revendications

1. Pièce (10) de garniture intérieure de ou pour un véhicule (12), comprenant
- un support (14) en une matière thermoplastique et ayant
o une première surface (16),
o une deuxième surface (18),
o au moins une élévation (24) disposée sur la première surface (16), et
- une couche (28) perforée de décor, appliqué à la première surface (16) et formant au moins un trou (30), le trou (30) ayant une forme telle que l'élévation (24) est entourée par la couche (28) de décor et fait saillie de la couche (28) de décor en formant, ainsi, une structure (32) de surface en trois dimensions,
**caractérisée en ce que** l'élévation (24) est formée par un composant (34) d'élévation distinct, qui est fixé au support (14) par l'intermédiaire de la première surface (16).

2. Pièce (10) de garniture intérieure suivant la revendication 1,
**caractérisée en ce que** la couche (28) de décor entoure l'élévation (24) d'une manière sans intervalle.

3. Pièce (10) de garniture intérieure suivant la revendication 1 ou la revendication 2,
**caractérisée en ce que** l'élévation (24) comprend une surface (26) raffinée.

4. Véhicule (12) comprenant une pièce (10) de garniture intérieure suivant l'une des revendications précédentes.

5. Procédé de fabrication d'une pièce (10) de garniture intérieure de ou pour un véhicule (12) comprenant les stades suivants :
- moulage par injection d'un support (14) en utilisant une matière thermoplastique, le support (14) comprenant une première surface (16) et une deuxième surface (18),
- moulage par injection d'au moins un composant (34) d'élévation distinct,
- fixation du composant (34) d'élévation distinct à la première surface (16) du support (14), en formant ainsi une élévation (24),
- se procurer une couche (28) de décor ayant au moins un trou (30), et
- laminer la coucher (28) de décor sur la première surface (16) de manière à ce que l'élévation (24) soit entournée par la couche (28) de décor et fasse saillie de la couche de décor (28), en formant, ainsi, une structure (32) de surface en trois dimensions.

6. Procédé suivant la revendication 5,
**caractérisé en ce que** le composant (34) d'élévation est en une matière thermoplastique dur.

7. Procédé suivant l'une des revendications 5 ou 6,
**caractérisé en ce que** le composant (34) d'élévation est fixé au support (14) par collage ou par soudage.

8. Procédé suivant l'une des revendications 5 à 7, comprenant le stade suivant :
- se procurer l'élévation (24) ou le composant (34) d'élévation avec une surface (26) raffinée par revêtement, peinturage ou estampage à chaud.

9. Procédé suivant l'une des revendications 5 à 8,
**caractérisé en ce que** la couche (28) de décor est faite d'une matière thermoplastique et/ou thermodurcissable souple.

10. Procédé suivant l'une des revendications 5 à 9,
**caractérisé en ce que** la couche (28) de décor est perforée par poinçonnement, par coupe au laser, par coupe au jet d'eau, par coupe par une lame ou produite par un faisceau laser, moulage par embouage, par pulvérisation ou par coulée.

11. Procédé suivant l'une des revendications 5 à 10,
**caractérisé en ce que** la couche (28) de décor est laminée sur la première surface (16) de manière à ce que la couche (28) de décor entoure l'élévation (24) d'une manière sans intervalle.
